(19) Europäisches Patentamt
European Patent Office
Office européen des brevets

(11) **EP 4 335 884 A1**

(12) **EUROPEAN PATENT APPLICATION**
published in accordance with Art. 153(4) EPC

(43) Date of publication:
**13.03.2024 Bulletin 2024/11**

(21) Application number: 22820280.0

(22) Date of filing: **08.06.2022**

(51) International Patent Classification (IPC):
*C08G 18/10* (2006.01)          *C08G 18/08* (2006.01)
*C08G 18/32* (2006.01)          *C08G 18/44* (2006.01)
*C08G 18/48* (2006.01)          *C08G 18/65* (2006.01)
*C09J 11/04* (2006.01)          *C09J 11/06* (2006.01)
*C09J 11/08* (2006.01)          *C09J 175/04* (2006.01)
*C09J 175/08* (2006.01)

(52) Cooperative Patent Classification (CPC):
**C08G 18/08; C08G 18/10; C08G 18/32;
C08G 18/44; C08G 18/48; C08G 18/65;
C09J 11/04; C09J 11/06; C09J 11/08;
C09J 175/04; C09J 175/08**

(86) International application number:
**PCT/JP2022/023182**

(87) International publication number:
**WO 2022/260101 (15.12.2022 Gazette 2022/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.06.2021   JP 2021096975
02.09.2021   JP 2021143552
01.02.2022   JP 2022013966**

(71) Applicant: **Tosoh Corporation
Yamaguchi 746-8501 (JP)**

(72) Inventor: **SHINOZUKA Yuji
Yokkaichi-shi, Mie 510-8540 (JP)**

(74) Representative: **TBK
Bavariaring 4-6
80336 München (DE)**

(54) **URETHANE RESIN-FORMING COMPOSITION, ADHESIVE AGENT, CURED PRODUCT, AND PRODUCTION METHOD FOR CURED PRODUCT**

(57)     A urethane resin-forming composition including: a main agent (A); and a curing agent (B), in which the main agent (A) contains an isocyanate group-terminated prepolymer (A-1) which is a reaction product of a component (a) containing one or more polyols (a-1) selected from the group consisting of a polyether polyol (a-1-1) and a polycarbonate polyol (a-1-2) and a polyisocyanate (a-2), the curing agent (B) contains an alicyclic diol (B-1), and the urethane resin-forming composition forms a urethane resin having a urethane group concentration of 2,800 mmol/kg or more.

**EP 4 335 884 A1**

**Description**

**Technical Field**

The present disclosure relates to a urethane resin-forming composition, an adhesive agent, a cured product, and a production method for a cured product.

**Background Art**

Adhesive agents for automotive structures have various required properties. Among these, stability of physical properties in an operating temperature range can be exemplified as a physical property that has received particular attention.

The operating temperature range is a temperature range in which automobiles are actually used, and is specifically 30°C to 80°C. If the change in physical properties is large in this temperature range, the rate of a change in properties of an adhesive agent in some environments in which they are used, resulting in problems such as low reliability.

Patent Literature 1 discloses a urethane adhesive composition including: a first liquid containing a specific formulation amount of filler and a prepolymer obtained by reacting a polyisocyanate with a polyol having a specific molecular weight; and a second liquid containing a catalyst and a polyol having a specific molecular weight, in which the number of moles of hydroxyl groups derived from the polyol in the first liquid and the number of moles of hydroxyl groups derived from the polyol in the second liquid have a specific relationship. According to Patent Literature 1, such a urethane adhesive composition can obtain favorable adhesive performance and also has excellent storage stability.

**Citation List**

**Patent Literature**

[Patent Literature 1] PCT International Publication No. WO2009/047962

**Summary of Invention**

**Technical Problem**

Patent Literature 1 does not disclose stability of physical properties in the operating temperature range. Patent Literature 1 mentions heat resistance durability. However, in Patent Literature 1, the tensile shear strength after being left in an environment of a temperature of 80°C for 20 days and returned to normal temperature is merely evaluated as heat resistance durability.

The urethane adhesive composition of Patent Literature 1 does not have sufficient stability of physical properties in an operating temperature range (for example, -30°C to 80°C), especially sufficient suppression of a change in elastic modulus in the operating temperature range (for example, -30°C to 80°C), and further improvement is required for practical use.

Therefore, one aspect of the present disclosure is directed to providing a urethane resin-forming composition and an adhesive agent capable of forming a cured product in which a change in elastic modulus is suppressed over a wide temperature range. In addition, one aspect of the present disclosure is directed to providing a cured product in which a change in elastic modulus is suppressed over a wide temperature range, and a production method for the same.

**Solution to Problem**

Each aspect of the present disclosure includes an embodiment shown below.

(1) A urethane resin-forming composition which forms a urethane resin having a urethane group concentration of 2,800 mmol/kg or more, the composition including: a main agent (A); and a curing agent (B), in which the main agent (A) contains an isocyanate group-terminated prepolymer (A-1) which is a reaction product of a component (a) containing one or more polyols (a-1) selected from the group consisting of a polyether polyol (a-1-1) and a polycarbonate polyol (a-1-2) and a polyisocyanate (a-2), and the curing agent (B) contains an alicyclic diol (B-1).

(2) The urethane resin-forming composition according to (1), which forms a urethane resin having a urethane group concentration of 2,800 mmol/kg to 4,700 mmol/kg.

(3) The urethane resin-forming composition according to (1) or (2), which forms a urethane resin having a urethane group concentration of 2,800 mmol/kg to 3,800 mmol/kg.

(4) The urethane resin-forming composition according to any one of (1) to (3), in which at least one of the component (a) and the curing agent (B) contains a polyfunctional component having three or more reactive groups.

(5) The urethane resin-forming composition according to (4), which forms a urethane resin having a content of a structural unit derived from the polyfunctional component of 50 mmol/kg to 1,000 mmol/kg.

(6) The urethane resin-forming composition according to any one of (1) to (5), in which the polyols (a-1) have a number average molecular weight of 2,500 or more.

(7) The urethane resin-forming composition according to any one of (1) to (6), in which a solvent content is 1.0 mass% or less.

(8) The urethane resin-forming composition according to any one of (1) to (7), further including: a filler (C).

(9) The urethane resin-forming composition according to any one of (1) to (8), in which at least one of the main agent (A) and the curing agent (B) is a liquid at a temperature of 25°C and at 1 atm.

(10) A two-component adhesive agent including: the urethane resin-forming composition according to any one of (1) to (9).

(11) An adhesive agent for an automotive structure including: the urethane resin-forming composition according to any one of (1) to (9).

(12) A cured product of the urethane resin-forming composition according to any one of (1) to (9).

(13) A production method for a cured product, including: a step of mixing a first agent containing a main agent (A) with a second agent containing a curing agent (B) to obtain a cured product containing a urethane resin, in which the main agent (A) contains an isocyanate group-terminated prepolymer (A-1) which is a reaction product of a component (a) containing one or more polyols (a-1) selected from the group consisting of a polyether polyol (a-1-1) and a polycarbonate polyol (a-1-2) and a polyisocyanate (a-2), the curing agent (B) contains an alicyclic diol (B-1), and the urethane resin has a urethane group concentration of 2,800 mmol/kg or more.

(14) The production method for a cured product according to (13), in which the urethane resin has a urethane group concentration of 2,800 mmol/kg to 4,700 mmol/kg.

(15) The production method for a cured product according to (13) or (14), in which the urethane resin has a urethane group concentration of 2,800 mmol/kg to 3,800 mmol/kg.

(16) The production method for a cured product according to any one of (13) to (15), in which at least one of the component (a) and the curing agent (B) contains a polyfunctional component.

(17) The production method for a cured product according to (16), in which the urethane resin has a content of a structural unit derived from the polyfunctional component of 50 mmol/kg to 1,000 mmol/kg.

(18) The production method for a cured product according to any one of (13) to (17), in which the polyols (a-1) have a number average molecular weight of 2,500 or more.

(19) The production method for a cured product according to any one of (13) to (18), in which a solvent content in the first agent and the second agent is 1.0 mass% or less based on a total amount of the first agent and the second agent.

(20) The production method for a cured product according to any one of (13) to (19), in which at least one of the first agent and the second agent further contains a filler (C).

(21) The production method for a cured product according to any one of (13) to (20), in which at least one of the main agent (A) and the curing agent (B) is a liquid at a temperature of 25°C and at 1 atm. Advantageous Effects of Invention

According to one aspect of the present disclosure, it is possible to provide a urethane resin-forming composition and an adhesive agent capable of forming a cured product in which a change in elastic modulus is suppressed over a wide temperature range. In addition, according to one aspect of the present disclosure, it is possible to provide a cured product in which a change in elastic modulus is suppressed over a wide temperature range, and a production method for the same.

**Description of Embodiment**

Hereinafter, an exemplary embodiment for implementing each aspect of the present disclosure will be described in detail.

[Urethane resin-forming composition]

A urethane resin-forming composition according to one aspect of the present disclosure includes a main agent (A) and a curing agent (B). The urethane resin-forming composition may be a two-component type in which the main agent (A) and the curing agent (B) are present separately, a one-component type in which the main agent (A) and the curing agent (B) are combined, or a multi-component type of three or more components. In a case where the one-component type requires long-term storage, it is preferable to take well-known measures such as blocking an isocyanate group-terminated prepolymer (A-1) so that functional groups do not react in the one-liquid state. In a case where the urethane resin-forming composition is a two-component type or a multi-component type, the urethane resin-forming composition may contain, for example, a first agent containing the main agent (A) and a second agent containing the curing agent (B). In any of the one-component type, two-component type, and multi-component type, each agent may be in a liquid form when in use, and may be, for example, a solid at normal temperature.

The main agent (A) contains an isocyanate group-terminated prepolymer (A-1) which is a reaction product of a component (a) containing one or more polyols (a-1) selected from the group consisting of a polyether polyol (a-1-1) and a polycarbonate polyol (a-1-2) and a polyisocyanate (a-2).

The curing agent (B) contains an alicyclic diol (B-1).

The urethane resin-forming composition is a composition that forms a urethane resin having a urethane group concentration of 2,800 mmol/kg or more (preferably 2,800 mmol/kg to 4,700 mmol/kg, more preferably 2,800 mmol/kg to 3,800 mmol/kg). In other words, the urethane resin-forming composition is a composition for which the main agent (A) and the curing agent (B) are selected so that a urethane resin having a urethane group concentration of 2,800 mmol/kg or more (preferably 2,800 mmol/kg to 4,700 mmol/kg, more preferably 2,800 mmol/kg to 3,800 mmol/kg) is formed.

With such a urethane group concentration, there is a tendency to obtain a cured product having a higher fracture toughness value ($G_{1c}$) and superior toughness. The fracture toughness value can be thought of as a composite index of flexibility and stiffness and expressed as a unit of energy. The higher the fracture toughness value, the better the resistance when energy (such as impact) is applied to an adhesive agent, which is preferable.

By curing the urethane resin-forming composition, it is possible to obtain a cured product in which a change in elastic modulus is suppressed over a wide temperature range (for example, -30°C to 80°C).

[[Main agent (A)]]

The main agent (A) contains an isocyanate group-terminated prepolymer (A-1). The isocyanate group-terminated prepolymer (A-1) is a reaction product of a component (a) containing a polyol (a-1) and a polyisocyanate (a-2).

Polyols (a-1) are one or more selected from the group consisting of a polyether polyol (a-1-1) and a polycarbonate polyol (a-1-2).

Examples of polyether polyols (a-1-1) include, for example, a polyether polyol which is an addition polymer of alkylene oxides using a compound having two active hydrogen groups as an initiator, and a polyether polyol which is a ring-opening polymer of cyclic ethers. The compound having two active hydrogen groups may be one or two or more, and examples thereof may include polyols (for example, ethylene glycol, 1,2-propanediol, 1,3-propanediol, 1,2-butanediol, 1,3-butanediol, 1,4-butanediol, 1,5-pentanediol, 1,6-hexanediol, 1,8-octanediol, 1,9-nonanediol, 3-methyl-1,5-pentanediol, 3,3-dimethylol heptane, diethylene glycol, dipropylene glycol, neopentyl glycol, cyclohexane-1,4-diol, cyclohexane-1,4-dimethanol, diol dimerate, bisphenol A, bis(β-hydroxyethyl) benzene, and xylylene glycol) and polyamines (for example, ethylenediamine, propylenediamine, toluenediamine, meta-phenylenediamine, diphenylmethanediamine, and xylylenediamine). Alkylene oxides may be used alone or in a combination of two or more thereof, and may be, for example, ethylene oxide, propylene oxide, and butylene oxide. Cyclic ethers may be used alone or in a combination of two or more thereof, and may be, for example, alkyl glycidyl ethers (for example, methyl glycidyl ether), aryl glycidyl ethers (for example, phenyl glycidyl ether), and tetrahydrofuran.

Examples of polycarbonate polyols (a-1-2) include condensation polymers of polyols with carbonates. Polyols may be used alone or in a combination of two or more thereof, and may be, for example, ethylene glycol, 1,2-propanediol, 1,3-propanediol, 1,2-butanediol, 1,3-butanediol, 1,4-butanediol, 1,5-pentanediol, 1,6-hexanediol, 1,8-octanediol, 1,9-nonanediol, 3-methyl-1,5-pentanediol, 3,3-dimethylol heptane, diethylene glycol, dipropylene glycol, neopentyl glycol, cyclohexane-1,4-diol, cyclohexane-1,4-dimethanol, glycerol, trimethylolpropane, diol dimerate, an ethylene oxide adduct of bisphenol A, a propylene oxide adduct of bisphenol A, bis(β-hydroxyethyl) benzene, and xylylene glycol. Carbonates may be used alone or in a combination of two or more thereof, and may be, for example, dialkyl carbonates (for example, dimethyl carbonate and diethyl carbonate), alkylene carbonates (for example, ethylene carbonate and propylene carbonate), diphenyl carbonate, dinaphthyl carbonate, dianthryl carbonate, diphenanthryl carbonate, and diindanyl carbonate.

In a case where a polyol (a-1) is a polyether polyol (a-1-1), a urethane resin-forming composition tends to have a cured product in which a change in elastic modulus is more significantly suppressed.

The number average molecular weight of the polyol (a-1) is preferably 2,500 or more, more preferably 2,500 to 10,000, and still more preferably 2,500 to 7,000. In the present disclosure, the number average molecular weight of the polyol (a-1) indicates a value measured through a method (titration method) according to JIS K 0070-1992.

The content of the polyol (a-1) based on the total amount of the component (a) may be, for example, 5 mass% or more, 10 mass% or more, 12 mass% or more, or 15 mass% or more. If the content of the polyol (a-1) is large, the fracture toughness value tends to be further improved. In addition, the content of the polyol (a-1) based on the total amount of the component (a) may be, for example, 61 mass% or less, 59 mass% or less, 57 mass% or less, or 55 mass% or less. If the content of the polyol (a-1) is small, the change in elastic modulus of a cured product tends to be further suppressed.

In a urethane resin formed from the urethane resin-forming composition, the content of a structural unit derived from the polyol (a-1) may be, for example, 10 mmol/kg or more, 20 mmol/kg or more, 30 mmol/kg or more, 40 mmol/kg or more, 50 mmol/kg or more, and may be 200 mmol/kg or less, 180 mmol/kg or less, 160 mmol/kg or less, 140 mmol/kg or less, 130 mmol/kg or less, 120 mmol/kg or less, 110 mmol/kg or less, or 100 mmol/kg or less. In addition, in the urethane resin formed from the urethane resin-forming composition, the content of the structural unit derived from the polyol (a-1) is preferably 10 mmol/kg to 130 mmol/kg and more preferably 30 mmol/kg to 100 mmol/kg. In other words, the urethane resin-forming composition may be a composition for which a main agent (A) and a curing agent (B) are selected so that a urethane resin having a content of the structural unit derived from the polyol (a-1) within the above-described ranges is formed. In the urethane resin-forming composition, the polyol (a-1) can also be formulated with the curing agent (B). That is, the "content of the structural unit derived from the polyol (a-1)" described above may be a total amount of a structural unit derived from a polyol (a-1) in the component (a) and a structural unit derived from a polyol (a-1) in the curing agent (B).

Examples of polyisocyanates (a-2) include a polyisocyanate having two or more isocyanate groups in the molecule. As a polyisocyanate (a-2), a polyisocyanate (diisocyanate) having two or more isocyanate groups in the molecule is preferable.

Examples of polyisocyanates include an aromatic polyisocyanate, an araliphatic polyisocyanate, an aliphatic polyisocyanate, and an alicyclic polyisocyanate. These can be used alone or in a combination of two or more thereof. Among these, an aromatic polyisocyanate is preferably used from the viewpoints of reactivity, viscosity, and the like.

Examples of aromatic polyisocyanates include 2,4-tolylene diisocyanate, 2,6-tolylene diisocyanate, a 2,4-tolylene diisocyanate/2,6-tolylene diisocyanate mixture, 2,2'-diphenylmethane diisocyanate, 4,4'-diphenylmethane diisocyanate, a 2,2'-diphenylmethane diisocyanate/4,4'-diphenylmethane diisocyanate mixture, 2,4'-diphenylmethane diisocyanate, a 2,4'-diphenylmethane diisocyanate/4,4'-diphenylmethane diisocyanate mixture, a 2,2'-diphenylmethane diisocyanate/2,4'-diphenylmethane diisocyanate/4,4'-diphenylmethane diisocyanate mixture, m-xylylene diisocyanate, p-xylylene diisocyanate, 4,4'-diphenyl ether diisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, m-phenylene diisocyanate, p-phenylene diisocyanate, naphthylene-1,4-diisocyanate, naphthylene-1,5-diisocyanate, and 3,3'-dimethoxydiphenyl-4,4'-diisocyanate.

Examples of araliphatic polyisocyanates include 1,3-xylylene diisocyanate, 1,4-xylylene diisocyanate, a 1,3-xylylene diisocyanate/1,4-xylylene diisocyanate mixture, 1,3-bis(1-isocyanato-1-methylethyl) benzene, 1,4-bis(1-isocyanato-1-methylethyl) benzene, a 1,3-bis(1-isocyanato-1-methylethyl) benzene/1,4-bis(1-isocyanato-1-methylethyl) benzene mixture, and ω,ω'-diisocyanato-1,4-diethylbenzene.

Examples of aliphatic polyisocyanates include tetramethylene diisocyanate, hexamethylene diisocyanate, 2-methylpentane-1,5-diisocyanate, 3-methylpentane-1,5-diisocyanate, lysine diisocyanate, trioxyethylene diisocyanate, ethylene diisocyanate, trimethylene diisocyanate, octamethylene diisocyanate, nonamethylene diisocyanate, 2,2'-dimethylpentane diisocyanate, 2,2,4-trimethylhexane diisocyanate, decamethylene diisocyanate, butene diisocyanate, 1,3-butadiene-1,4-diisocyanate, 2,4,4-trimethylhexamethylene diisocyanate, 1,6,11-undecane triisocyanate, 1,3,6-hexamethylene triisocyanate, 1,8-diisocyanate-4-isocyanate methyloctane, 2,5,7-trimethyl-1,8-diisocyanate-5-isocyanate methyloctane, bis(isocyanatoethyl) carbonate, bis(isocyanatoethyl) ether, 1,4-butylene glycol dipropyl ether-α,α'-diisocyanate, lysine diisocyanate methyl ester, 2-isocyanatoethyl-2,6-diisocyanatohexeanoate, and 2-isocyanate propyl-2,6-diisocyanatohexanoate.

Examples of alicyclic polyisocyanates include isophorone diisocyanate, cyclohexane diisocyanate, bis(isocyanatomethyl) cyclohexane, dicyclohexylmethane diisocyanate, methylcyclohexane diisocyanate, dicyclohexyldimethylmethane diisocyanate, 2,2'-dimethyldicyclohexylmethane diisocyanate, bis(4-isocyanate-n-butylidene) pentaerythritol, hydrogenated hydrogenated dimer acid diisocyanate, 2-isocyanatomethyl-3-(3-isocyanatopropyl)-5-isocyanatomethyl-bicyclo [2.2.1]-heptane, 2-isocyanatomethyl-3-(3-isocyanatopropyl)-6-isocyanatomethyl-bicyclo [2.2.1]-heptane, 2-isocyanatomethyl-2-(3-isocyanatopropyl)-5-isocyanatomethyl-bicyclo [2.2.1]-heptane, 2-isocyanatomethyl-2-(3-isocyanatopropyl)-6-isocyanatomethyl-bicyclo [2.2.1]-heptane, 2-isocyanatomethyl-3-(3-isocyanatopropyl)-5-(2-isocyanatoethyl)-bicyc lo-[2.2.1]-heptane, 2-isocyanatomethyl-3-(3-isocyanatopropyl)-6-(2-isocyanatoethyl)-bicyc lo-[2.2.1]-heptane, 2-isocyanatomethyl-2-(3-isocyanatopropyl)-5-(2-isocyanatoethyl)-bicyc lo-[2.2.1]-heptane, 2-isocyanatomethyl-2-(3-isocyanatopropyl)-6-(2-isocyanatoethyl)-bicyc lo-[2.2.1]-heptane, 2,5-bis(isocyanatomethyl)-bicyclo[2.2.1]-heptane, hydrogenated hydrogenated diphenylmethane diisocyanate, norbornane diisocyanate, hydrogenated hydrogenated tolylene diisocyanate, hydrogenated hydrogenated xylene diisocyanate, and hydrogenated hydrogenated tetramethylxylene diisocyanate.

The content of the polyisocyanate (a-2) based on the total amount of the component (a) may be, for example, 40 mass% or more, 42 mass% or more, 44 mass% or more, or 46 mass% or more. If the content of the polyisocyanate (a-2) is large, the change in elastic modulus of a cured product tends to be further suppressed. In addition, the content of the polyisocyanate (a-2) based on the total amount of the component (a) may be, for example, 95 mass% or less, 90 mass% or less, 88 mass% or less, or 85 mass% or less. If the content of the polyisocyanate (a-2) is small, the fracture toughness value tends to be further improved.

In the urethane resin formed from the urethane resin-forming composition, the content of the structural unit derived from the polyisocyanate (a-2) is preferably 1,000 mmol/kg to 3,000 mmol/kg and more preferably 1,500 mmol/kg to 2,500 mmol/kg. In other words, the urethane resin-forming composition may be a composition for which a main agent (A) and a curing agent (B) are selected so that a urethane resin having a content of the structural unit derived from the polyisocyanate (a-2) within the above-described ranges is formed. In addition, it can also be said that the content of the structural unit derived from the polyisocyanate (a-2) in the isocyanate group-terminated prepolymer (A-1) in the urethane resin-forming composition may be within the above-described ranges.

The component (a) may contain a polyfunctional component. The polyfunctional component is a compound having three or more reactive groups. The reactive groups may be any group that can react with an isocyanate group or a hydroxy group to form a bond. The reactive groups may be, for example, an isocyanate group or active hydrogen groups (for example, a hydroxy group and an amino group). The polyfunctional component can be used alone or in a combination of two or more thereof.

The polyfunctional component may be a polyol (a-1), a polyisocyanate (a-2), or a compound (a-3) other than the polyol (a-1) and the polyisocyanate (a-2).

The compound (a-3) may be a compound having three or more active hydrogen groups, a compound having three or more hydroxy groups, or a compound having three hydroxy groups. Examples of compounds (a-3) include glycerol, trimethylolpropane, pentaerythritol, N,N-bishydroxypropyl-N-hydroxyethylamine, triethanolamine, triisopropanolamine, a monomer polyol of modified ethylenediamine propylene oxide, a monomer polyol of modified trimethylolpropane propylene oxide, and modified pentaerythritol propylene oxide. In addition, examples of compounds (a-3) include polycaprolactone polyol which is a ring-opening addition polymer of cyclic esters (for example, ε-caprolactone, β-butyrolactone, γ-butyrolactone, γ-valerolactone, and δ-valerolactone) and polyols (for example, glycerol, trimethylolpropane, and pentaerythritol) having three or more hydroxy groups.

The content of the polyfunctional component based on the total amount of the component (a) may be, for example, 10 mass% or less, 7 mass% or less, 5 mass% or less, or 3 mass% or less. The component (a) may not contain a polyfunctional component, and the content of the polyfunctional component may be 0 mass% or more based on the total amount of the component (a).

In the urethane resin formed from the urethane resin-forming composition, the content of the structural unit derived from the polyfunctional component is preferably 1,500 mmol/kg or less, more preferably 25 mmol/kg to 1,250 mmol/kg, and particularly preferably 50 mmol/kg to 1,000 mmol/kg. If the content of the structural unit derived from the polyfunctional component is within the above-described ranges, there is a tendency to obtain a cured product having a high fracture toughness value ($G_{1c}$) and excellent toughness. In other words, the urethane resin-forming composition may be a composition for which a main agent (A) and a curing agent (B) are selected so that a urethane resin having a content of the structural unit derived from the polyfunctional component within the above-described ranges is formed. In the urethane resin-forming composition, the polyfunctional component can also be formulated with the curing agent (B). That is, the "content of the structural unit derived from the polyfunctional component" described above may be a total amount of a structural unit derived from a polyfunctional component in the component (a) and a structural unit derived from a polyfunctional component in the curing agent (B).

In the urethane resin formed from the urethane resin-forming composition, the content of the structural unit derived from a crosslinkable group in the polyfunctional component is preferably 1,500 mmol/kg or less, more preferably 25 mmol/kg to 1,250 mmol/kg, and particularly preferably 50 mmol/kg to 1,000 mmol/kg. If the content of the structural unit derived from the crosslinkable group is within the above-described ranges, there is a tendency to obtain a cured product having a high fracture toughness value ($G_{1c}$) and excellent toughness. In other words, the urethane resin-forming composition may be a composition for which a main agent (A) and a curing agent (B) are selected so that a urethane resin having a content of the structural unit derived from the crosslinkable group within the above-described ranges is formed. In the urethane resin-forming composition, the polyfunctional component can also be formulated with the curing agent (B). That is, the "content of the structural unit derived from the crosslinkable group" described above may be a total amount of a structural unit derived from a crosslinkable group in a polyfunctional component in the component (a) and a structural unit derived from a crosslinkable group in a polyfunctional component in the curing agent (B).

Here, the crosslinkable group is a functional group that forms a crosslink. Taking a trifunctional polyol (for example, glycerol) as an example, one hydroxy group in one molecule forms a crosslink and the remaining two hydroxy groups do not contribute to cross-linking, and therefore, in this case, there is one crosslinkable group. That is, in the case of the trifunctional polyol, the content of the crosslinkable group is synonymous with the content of the trifunctional polyol because the trifunctional polyol has one crosslinkable group.

The component (a) may further contain, as components other than the polyol (a-1) and the polyisocyanate (a-2), one or more diols (a-4), as described below, selected from the group consisting of an alicyclic diol (B-1) and a diol (B-3) having a number average molecular weight of less than 1,000.

The content of the diols (a-4) based on the total amount of the component (a) may be, for example, 5 mass% or less, 4 mass% or less, 3 mass% or less, or 2 mass% or less. The component (a) may not contain the diols (a-4), and the content of the diols (a-4) may be 0 mass% or more based on the total amount of the component (a).

In the component (a), at least one of the polyol (a-1) and the polyisocyanate (a-2) is preferably a liquid at 25°C and 1 atm.

In the component (a), the (OH/NCO) ratio of the total number of hydroxy groups to the total number of isocyanate groups may be, for example, 0.02 or more, 0.03 or more, 0.04 or more, or 0.05 or more. In addition, the (OH/NCO) ratio in the component (a) may be, for example, 0.5 or less, 0.4 or less, 0.3 or less, or 0.2 or less.

The isocyanate group-terminated prepolymer (A-1) is a reaction product of the component (a). The isocyanate group-terminated prepolymer (A-1) may be a reaction product obtained by reacting all of the component (a) or may be a reaction product obtained by reacting a part of the component (a).

The reaction conditions of the component (a) are not particularly limited as long as the hydroxy groups and the isocyanate groups in the component (a) are reacted with each other to form a urethane bond. The reaction temperature of the component (a) may be, for example, 70°C to 80°C. The reaction time of the component (a) may be, for example, 2 to 6 hours.

The isocyanate group-terminated prepolymer (A-1) is preferably a liquid at 25°C and 1 atm.

The main agent (A) may contain components other than the isocyanate group-terminated prepolymer (A-1). As other components, those (for example, a colorant, an antistatic agent, and a preservative) that do not react with functional groups in a curing agent (B) to be described below and the isocyanate group-terminated prepolymer (A-1) are preferable.

The main agent (A) is preferably a liquid at 25°C and 1 atm.

[[Curing agent (B)]]

The curing agent (B) contains an alicyclic diol (B-1). The alicyclic diol (B-1) can be used alone or in a combination of two or more thereof.

Examples of alicyclic diols (B-1) include 1,4-cyclohexanediol, cycloheptanediol, cyclooctanediol, 1,4-cyclohexane dimethanol, hydroxypropyl cyclohexanol, isohexide, tricyclo$[5.2.1.0^{2,6}]$decane-4,8-dimethanol, and alkylene oxide adducts thereof.

The number average molecular weight of the alicyclic diol (B-1) is preferably 500 g/mol or less and more preferably 250 g/mol or less. In the present disclosure, the number average molecular weight indicates a value measured through a method (titration method) according to JIS K 0070-1992.

In the urethane resin formed from the urethane resin-forming composition, the content of the structural unit derived from the alicyclic diol (B-1) is preferably 100 mmol/kg to 3,000 mmol/kg and more preferably 400 mmol/kg to 2,000 mmol/kg. In other words, the urethane resin-forming composition may be a composition for which a main agent (A) and a curing agent (B) are selected so that a urethane resin having a content of the structural unit derived from the alicyclic diol (B-1) within the above-described ranges is formed. In the urethane resin-forming composition, the alicyclic diol (B-1) can also be formulated with the above-described component (a). That is, the "content of the structural unit derived from the alicyclic diol (B-1)" described above may be a total amount of a structural unit derived from an alicyclic diol (B-1) in the component (a) and a structural unit derived from an alicyclic diol (B-1) in the curing agent (B).

The curing agent (B) may further contain a polyfunctional component. The polyfunctional component is a compound having three or more reactive groups. The polyfunctional component can be used alone or in a combination of two or more thereof. As the polyfunctional component, the same one as the polyfunctional component in the component (a) can be exemplified.

The polyfunctional component contained in the curing agent (B) is preferably a compound (B-2) having three or more hydroxy groups.

Examples of compounds (B-2) include glycerol, trimethylolpropane, pentaerythritol, N,N-bishydroxypropyl-N-hydroxyethylamine, triethanolamine, triisopropanolamine, a monomer polyol of modified ethylenediamine propylene oxide, a monomer polyol of modified trimethylolpropane propylene oxide, and modified pentaerythritol propylene oxide. In addition, examples of compounds (B-2) include polycaprolactone polyol which is a ring-opening addition polymer of cyclic esters (for example, ε-caprolactone, β-butyrolactone, γ-butyrolactone, γ-valerolactone, and δ-valerolactone) and polyols (for example, glycerol, trimethylolpropane, and pentaerythritol) having three or more hydroxy groups.

The content of the polyfunctional component based on the total amount of the curing agent (B) may be, for example, 80 mass% or less, 70 mass% or less, 60 mass% or less, 50 mass% or less, 40 mass% or less, 30 mass% or less, or 20 mass% or less. The curing agent (B) may not contain a polyfunctional component, and the content of the polyfunctional component may be 0 mass% or more based on the total amount of the curing agent (B).

The content of a structural unit derived from the polyfunctional component in the urethane resin formed from the urethane resin-forming composition is as described above.

The curing agent (B) may further contain the compounds exemplified as the polyols (a-1) described above.

The curing agent (B) may further contain a diol (B-3) having a number average molecular weight of less than 1,000 as a component other than the alicyclic diol (B-1) and the polyol (a-1) described above. The diol (B-3) more preferably has a number average molecular weight of less than 500.

Examples of diols (B-3) include aliphatic diol (B-3-1).

Examples of aliphatic diols (B-3-1) include ethylene glycol, 1,2-propanediol, 1,3-propanediol, 1,2-butanediol, 1,3-butanediol, 1,4-butanediol, 1,5-pentanediol, 1,6-hexanediol, 1,8-octanediol, 1,9-nonanediol, 3-methyl-1,5-pentanediol, 3,3-dimethylol heptane, neopentyl glycol, diethylene glycol, and dipropylene glycol.

In the urethane resin formed from the urethane resin-forming composition, the content of the structural unit derived from the aliphatic diol (B-3-1) may be, for example, 1,300 mmol/kg or less, 1,200 mmol/kg or less, or 1,100 mmol/kg or less. In addition, in the urethane resin formed from the urethane resin-forming composition, the content of the structural unit derived from the aliphatic diol (B-3-1) may be, for example, 0 mmol/kg or more, 100 mmol/kg or more, or 200 mmol/kg or more. In other words, the urethane resin-forming composition may be a composition for which a main agent (A) and a curing agent (B) are selected so that a urethane resin having a content of the structural unit derived from the aliphatic diol (B-3-1) within the above-described ranges is formed. In the urethane resin-forming composition, the aliphatic diol (B-3-1) can also be formulated with the above-described component (a). That is, the "content of the structural unit derived from the aliphatic diol (B-3-1)" described above may be a total amount of a structural unit derived from an aliphatic diol (B-3-1) in the component (a) and a structural unit derived from an aliphatic diol (B-3-1) in the curing agent (B).

Examples of diols (B-3) include a diol (B-3-2) having at least one bond selected from the group consisting of an ether bond, an ester bond, and a carbonate bond. Examples of such diols (B-3-2) include a polyether polyol, a polycarbonate polyol, and a polyester polyol.

As the polyether polyol and the polycarbonate polyol, the same ones described above can be exemplified.

Examples of polyester polyols include condensation polymers of polyols with dicarboxylic acids or their anhydrides. Polyols may be used alone or in a combination of two or more thereof, and may be, for example, ethylene glycol, 1,2-propanediol, 1,3-propanediol, 1,2-butanediol, 1,3-butanediol, 1,4-butanediol, 1,5-pentanediol, 1,6-hexanediol, 1,8-octanediol, 1,9-nonanediol, 3-methyl-1,5-pentanediol, 3,3-dimethylol heptane, diethylene glycol, dipropylene glycol, neopentyl glycol, cyclohexane-1,4-diol, cyclohexane-1,4-dimethanol, glycerol, trimethylolpropane, diol dimerate, an ethylene oxide adduct of bisphenol A, a propylene oxide adduct of bisphenol A, bis($\beta$-hydroxyethyl) benzene, and xylylene glycol. Dicarboxylic acids may be, for example, phthalic acid, isophthalic acid, terephthalic acid, naphthalenedicarboxylic acid, succinic acid, tartaric acid, oxalic acid, malonic acid, glutaric acid, adipic acid, pimelic acid, suberic acid, glutaconic acid, azelaic acid, sebacic acid, 1,4-cyclohexyldicarboxylic acid, $\alpha$-hydromuconic acid, $\beta$-hydromuconic acid, oc-butyl-oc-ethylglutaric acid, $\alpha,\beta$-diethylsuccinic acid, maleic acid, and fumaric acid.

Examples of diols (B-3-2) include polyester amide polyol obtained by substituting some polyols in the above-described polyester polyol with a low-molecular-weight amino alcohol or a low-molecular-weight polyamine such as hexamethylenediamine, isophoronediamine, and monoethanolamine.

In the urethane resin formed from the urethane resin-forming composition, the content of the structural unit derived from a diol (B-3-2) may be, for example, 100 mmol/kg or less, 80 mmol/kg or less, or 60 mmol/kg or less. In addition, in the urethane resin formed from the urethane resin-forming composition, the content of the structural unit derived from the diol (B-3-2) may be, for example, 0 mmol/kg or more, or may be 5 mmol/kg or more or 10 mmol/kg or more. In other words, the urethane resin-forming composition may be a composition for which a main agent (A) and a curing agent (B) are selected so that a urethane resin having a content of the structural unit derived from the diol (B-3-2) within the above-described ranges is formed. In the urethane resin-forming composition, the diol (B-3-2) can also be formulated with the above-described component (a). That is, the "content of the structural unit derived from the diol (B-3-2)" described above may be a total amount of a structural unit derived from a diol (B-3-2) in the component (a) and a structural unit derived from a diol (B-3-2) in the curing agent (B).

The curing agent (B) may further contain an active hydrogen-containing compound as a component other than the above. Examples of such active hydrogen-containing compounds include a compound having functional groups such as an amino group, a thiol group, and a carboxyl group. These active hydrogen-containing compounds can be used alone or in a combination of two or more thereof.

The curing agent (B) may contain components other than the above. As other components, those (for example, a colorant, an antistatic agent, and a preservative) that do not react with functional groups in a curing agent (B) and the isocyanate group-terminated prepolymer (A-1) are preferable.

At least one of the alicyclic diol (B-1) and the diol (B-3) in the curing agent (B) is preferably a liquid at 25°C and 1 atm, and both of them are more preferably liquids at 25°C and 1 atm.

The (B/A) ratio of the total number of hydroxy groups in the curing agent (B) to the total number of isocyanate groups in the main agent (A) may be, for example, 0.6 or more, 0.7 or more, 0.8 or more, or 0.9 or more. In addition, the above-described (B/A) ratio may be, for example, 1.2 or less, 1.15 or less, 1.10 or less, or 1.05 or less. If the (B/A) ratio is within the above-described ranges, the resin strength tends to be further improved. In a case where the urethane resin-forming composition is a two-component type, two liquids in the urethane resin-forming composition may be mixed with each other so that the main agent (A) and the curing agent (B) satisfy the above-described (B/A) ratio.

The curing agent (B) is preferably a liquid at 25°C and 1 atm.

In the urethane resin-forming composition, from the viewpoint of handling properties, at least one of the main agent (A) and the curing agent (B) is preferably a liquid at 25°C and 1 atm and both of them are more preferably liquids at 25°C and 1 atm.

[[Filler (C)]]

The urethane resin-forming composition may further contain a filler (C). In a case where the urethane resin-forming composition is a two-component type, the filler (C) may be contained in a first agent together with the main agent (A), may be contained in a second agent together with the curing agent (B), or may be contained in both of the first agent and the second agent. That is, the urethane resin-forming composition may contain, for example: a first agent containing the main agent (A) and the filler (C) and a second agent containing the curing agent (B); a first agent containing the main agent (A) and a second agent containing the curing agent (B) and the filler (C); or a first agent containing the main agent (A) and the filler (C) and a second agent containing the curing agent (B) and the filler (C).

Examples of fillers (C) include a well-known filler. The filler (C) may be, for example, an inorganic filler or an organic filler, and is preferably an inorganic filler. The filler (C) can be used alone or in a combination of two or more thereof.

Examples of inorganic fillers include talc, a zeolite, silica, microballoons, clay, glass balloons, carbon black, and calcium carbonate. The inorganic fillers are not limited thereto. These can be used alone or in a combination of two or more thereof.

Examples of organic fillers include polyamide particles, acrylic particles, carbon nanotubes, starch, natural organic fibers, and synthetic fibers.

The content of the filler (C) based on the total mass of the urethane resin-forming composition is, for example, preferably 10 mass% to 70 mass% and more preferably 10 mass% to 50 mass%. When the content of the filler (C) is 10 mass% or more, dripping can be more favorably suppressed. When the content of the filler (C) is 70 mass% or less, the filler (C) is likely to be more uniformly mixed with other components, and more favorable adhesive strength and coatability can be obtained. In a case where the urethane resin-forming composition is a two-component type, the total mass of the urethane resin-forming composition may be a total amount of a first agent and a second agent mixed with each other to form a cured product.

The urethane resin-forming composition may be a two-component type in which a first agent containing the main agent (A) and a second agent containing the curing agent (B) are present separately, or a one-component type in which the main agent (A) is mixed with the curing agent (B).

The temperature and time for mixing the first agent with the second agent may be, for example, 10°C to 35°C and 1 to 60 minutes.

The mixing method when mixing the first agent with the second agent is not particularly limited. For example, the mixing may be performed manually with a spatula or may be performed using a mechanical rotary mixer, a static mixer, and the like.

The urethane resin-forming composition preferably contains 1.0 mass% or less of a solvent. In addition, the urethane resin-forming composition may not contain substantially a solvent, that is, solvent-free. However, in a case where a solvent is contained as an impurity, this case belongs to a substantial solvent-free category.

In a case where the urethane resin-forming composition is a two-component type, the content of a solvent in the first agent is preferably 1.0 mass% or less, and the content of a solvent in the second agent is preferably 1.0 mass% or less. In addition, the content of the solvents in the first agent and the second agent mixed is preferably 1.0 mass% or less based on the total amount of the first agent and the second agent mixed to form a cured product.

The urethane resin-forming composition can be suitably used as an adhesive agent (particularly, a two-component adhesive agent) for various applications. Examples of application fields include the automotive field, the display field, the recording medium field, the electronic material field, the battery field, the optical component field, the construction field, the electronic device field, and the aviation field.

The composition can be used in the automotive field, for example, automotive structural parts, switch parts, headlamps, internal engine parts, electrical parts, drive engines, and brake oil tanks. The composition can be used in the display field, for example, liquid crystal displays, organic electroluminescence, and light emitting diode display devices.

The composition can be used in the recording medium field, for example, video discs, CDs, DVDs, MDs, pickup lenses, VCM magnets, spindle motors, hard disk peripheral members, and Blu-ray Disc.

The composition can be used in the electronic material field, for example, electronic components, electrical circuits, electrical contacts, and semiconductor elements, and detailed examples of such applications include sealing materials, die-bonding agents, conductive adhesive agents, anisotropic conductive adhesive agents, and interlayer adhesive agents for multilayer substrates including build-up substrates. The composition can be used in the battery field, for example, lithium ion batteries, manganese batteries, alkali batteries, nickel batteries, fuel cells, silicon solar cells, dye-sensitized solar cells, and organic solar cells. The composition can be used in the optical component field, for example: optical fiber materials around optical switches and optical connectors in optical communication systems; optical passive components; optical circuit components; and the periphery of optoelectronic integrated circuits. The composition can be used in the electronic device field, for example, camera modules.

Since the urethane resin-forming composition has favorable stability of physical properties in the operating temperature range (for example, -30°C to 80°C), it can be particularly suitably used as an adhesive agent for an automotive structure.

[Cured product]

A cured product according to one aspect of the present disclosure is a cured product of the above-described urethane resin-forming composition.

The cured product contains a urethane resin which is a reaction product of the main agent (A) and the curing agent (B).

The urethane resin in the cured product may have a urethane group concentration of 2,800 mmol/kg or more, preferably 2,800 mmol/kg to 4,700 mmol/kg, and more preferably 2,800 mmol/kg to 3,800 mmol/kg. With such a urethane group concentration, there is a tendency that a cured product having a higher fracture toughness value ($G_{1c}$) and superior toughness is obtained.

The urethane resin-forming composition is cured by reacting the main agent (A) with the curing agent (B). The urethane resin-forming composition may be cured by, for example, mixing a first agent with a second agent to cause a reaction between the main agent (A) and the curing agent (B).

The reaction conditions when reacting the main agent (A) with the curing agent (B) are not particularly limited. For example, the heating temperature may be 100°C to 200°C, and the heating time may be 20 minutes to 10 hours. In addition, the reaction between the main agent (A) and the curing agent (B) may be carried out in one stage of heating, or may be carried out through multi-stage heating in two or more stages.

In the present disclosure, the fracture toughness value of a cured product is measured through the following method by a DCP test.

The DCP test is performed according to ASTM D3433-99.

Resin thickness: Adjusted with a spacer to 0.35 mm.

Teflon (registered trademark) tape is used as a spacer.

Test piece shape: A contoured type is used.

Test base material: A S50C steel material (electroless nickel-plating treatment) is used.

Test conditions: Stretching is performed at 2 mm/min, and the fracture toughness value $G^{1c}$ is calculated based on the maximum load.

$$\text{Calculation equation: } G_{1c} = [4L^2 \, (\text{max})](m)/[EB^2]$$

L(max) as load: (N)
E as Young's modulus (MPa) of base material: 208,000
B as width (mm) of base material: 25.49 m as constant (from contoured type): 3.54

In the present disclosure, the elastic modulus of a cured product is measured through the following viscoelasticity measurement.

A cured product is die-cut using a dumbbell for viscoelasticity measurement to obtain a measurement sample, and viscoelasticity measurement was performed under the following measurement conditions to measure the elastic modulus.

· Frequency: 10 Hz
· Temperature increase rate: 2°C/min
· Measurement temperature: -100°C to 250°C

· Measurement device: Viscoelasticity measurement device DMA7100 manufactured by Hitachi High-Tech Corporation

[Examples]

Hereinafter, the present invention will be described more specifically based on the following examples. However, the present invention is not limited to the examples.

[Raw material]

The following raw materials were used to perform examples and comparative examples.

· "MT": Millionate MT (monomeric MDI manufactured by Tosoh Corporation), molecular weight of 250, f=2
"N-968": Amorphous polycarbonate polyol N-968 (manufactured by Tosoh Corporation), hydroxyl value=37.5 KOHmg/g, f=2
· "TMP": Trimethylolpropane (manufactured by Mitsubishi Gas Chemical Company, Inc.), molecular weight of 134, f=3
· "PTG-L3500": Amorphous polytetramethylene ether glycol (manufactured by Hodogaya Chemical Co., Ltd.), number average molecular weight of 3,500, f=2
· "PCD3000": Polycarbonate polyol N-969 (manufactured by Tosoh Corporation), number average molecular weight of 3,000, f=2
· "PES3000": Polyester polyol, Kuraray Polyol P-3010 (manufactured by Kuraray Co., Ltd.), number average molecular weight of 3,000, f=2
· "BG": Butylene glycol (manufactured by Mitsubishi Chemical Corporation), 1,4-butanediol, molecular weight of 90, f=2
· "CHDM": 1,4-cyclohexane dimethanol (manufactured by FUJIFILM Wako Pure Chemical Corporation)
· "Zeolite": Zeolum A-3 (manufactured by Tosoh Corporation)
· "Talc": Crown Talc R (manufactured by Matsumura Sangyo Co., Ltd.)
"TDDM": Tricyclo5.2.1.0$^{2,6}$decane-4,8-dimethanol (manufactured by Sigma-Aldrich Co. LLC.)

(Examples 1 to 24 and Comparative Examples 1 to 6)

Raw materials of a main agent each were placed in a 2 L stirring vessel filled with nitrogen according to prescription shown in Tables 1 to 6 and stirred. Thereafter, a urethanization reaction was allowed to proceed for about 2 to 5 hours while maintaining the temperature in the stirring vessel at 70°C to 80°C to obtain a main agent (A).
Next, a filler (C) (50 mass% of talc 150 mass% of zeolite) was added to the main agent (A) so that the amount of filler in the system became 1/3 (mass ratio), and the mixture was mixed and defoamed to obtain a first agent.
In addition, raw materials of a curing agent each were placed in a 2 L stirring vessel filled with nitrogen according to prescription shown in Tables 1 to 6 and stirred. Thereafter, the mixture was mixed and stirred for about 1 to 3 hours while maintaining the temperature in the stirring vessel at 70°C to 80°C to obtain a curing agent (B). This curing agent (B) was used as a second agent.

[DCB Test (fracture toughness value)]

A DCB test was performed under the following conditions according to ASTM D3433-99.
Resin thickness: Adjusted with a spacer to 0.35 mm (Teflon (registered trademark) tape was used as the spacer).
Test piece shape: A contoured type was used.
Test base material: A S50C steel material (electroless nickel-plating treatment) was used.
Test conditions: Stretching was performed at 2 mm/min, and the fracture toughness value $G_{1c}$ was calculated based on the maximum load.

$$\text{Calculation equation: } G_{1c}=[4L^2 \ (max)](m)/[EB^2]$$

L(max) as load: (N)
E as Young's modulus (MPa) of base material: 208,000
B as width (mm) of base material: 25.49
m as constant (from contoured type): 3.54

Specifically, the first agent and the second agent were mixed with each other according to the compositions of Tables 1 to 6, stirred for 30 seconds, and then applied onto a first base material. A 0.35 mm thick Teflon (registered trademark) seal was attached to the first substrate in a range of 4.9 cm from one end of the first substrate to form a preliminary crack in the test piece. In addition, a 0.35 mm thick Teflon (registered trademark) seal was attached to the first substrate in a range of 2 cm from the other end of the first substrate to make the coating thickness of an adhesive agent uniform. A second base material was piled on the coated surface and fixed with a clamp. Next, two-step heat treatment was performed at 130°C for 1.5 hours and 110°C for 20 hours and cured to obtain a test piece. The obtained test piece was subjected to a DCB test under the above-described conditions, and the fracture toughness value $G_{1c}$ was calculated from the results. The results are shown in Tables 1 to 6.

[Cohesive failure rate]

After the DCB test, the broken surface of the sample was visually observed, and the proportion of the broken area in the cured product layer part was measured. The measurement results are shown in Tables 1 to 6.

Cohesive failure: A state in which the cured product layer is broken.

Interfacial failure: A state in which the cured product is peeled off at a base material interface.

[DMA Measurement (measurement of elastic modulus)]

The elastic modulus was measured under the following conditions.

· Frequency: 10 Hz
· Temperature increase rate: 2°C/min
· Measurement temperature: -100°C to 250°C
· Measurement device: Viscoelasticity measurement device DMA7100 manufactured by Hitachi High-Tech Corporation

Specifically, after mixing a first agent with a second agent at 1:1 (mass ratio) and stirring the mixture for 30 seconds, the mixture was poured into a mold with a thickness of the spacer of 2 mm and subjected to two-step heat treatment at 130°C for 1.5 hours and 110°C for 20 hours to cure and obtain a cured product. The cured product was die-cut with a viscoelasticity-exclusive dumbbell to obtain a test piece. The obtained test piece was subject to DMA measurement under the above-described conditions. The measurement results of the elastic modulus at -30°C to 80°C are shown in Tables 1 to 6. In addition, the retention rate of the elastic modulus at 80°C to the elastic modulus at -30°C was obtained and described in Tables 1 to 6 as "Elastic modulus retention rate (%)."

[Table 1]

| | | | Charged amount g(mmol) | | | | | | |
|---|---|---|---|---|---|---|---|---|---|
| | | | Example 1 | Example 2 | Example 3 | Example 4 | Example 5 | Example 6 | Example 7 |
| Main agent | MT | | 460 (1838) | 460 (1838) | 394 (1575) | 460 (1838) | 460 (1838) | 460 (1838) | 460(1838) |
| | PTG-L3500 | | 317(88) | 317(88) | 423 (118) | 334 (93) | 308 (86) | 308 (86) | 334 (93) |
| | TMP | | - | 21 (153) | - | | - | 13 (100) | 35 (260) |
| Curing agent | BG | | - | - | - | - | - | - | - |
| | CHDM | | 196 (1362) | 196 (1362) | 156 (1082) | 152 (1057) | 218 (1514) | 218 (1514) | 152 (1057) |
| | TDDM | | - | - | - | - | - | - | - |
| | TMP | | 27 (200) | 6 (47) | 27 (200) | 54 (400) | 13 (100) | | 19 (140) |
| Urethane group concentration (mmol/g) | | | 3.5 | 3.5 | 3.0 | 3.5 | 3.5 | 3.5 | 3.5 |
| Cross-linking density (mmol/g) | | | 0.2 | 0.2 | 0.2 | 0.4 | 0.1 | 0.1 | 0.4 |
| $G_{Ic}$ (kJ/m2) | | | 0.60 | 1.03 | 2.03 | 1.19 | 0.62 | 0.60 | 1.25 |

(continued)

| | Charged amount g(mmol) | | | | | | |
|---|---|---|---|---|---|---|---|
| | Example 1 | Example 2 | Example 3 | Example 4 | Example 5 | Example 6 | Example 7 |
| Cohesive failure rate (%) | 100 | 100 | 100 | 100 | 100 | 100 | 100 |
| E' @-30°C (Pa) E' @80°C (Pa) | 1.31E+09 5.27E+08 | 1.32E+09 5.50E+08 | 8.37E+08 3.39E+08 | 1.24E+09 6.32E+08 | 1.38E+09 5.96E+08 | 1.40E+09 5.89E+08 | 1.30E+09 6.46E+08 |
| Elastic modulus retention rate (%) | 40 | 42 | 41 | 51 | 43 | 42 | 50 |

[Table 2]

| | | Charged amount g(mmol) | | | | | | | |
|---|---|---|---|---|---|---|---|---|---|
| | | Example 8 | Example 9 | Example 10 | Example 11 | Example 12 | Example 13 | Example 14 | Example 15 |
| Main agent | MT<br>PTG-L3500<br>TMP | 460 (1838)<br>351 (98)<br>- | 460 (1838)<br>368 (103)<br>- | 526 (2100)<br>211 (59)<br>- | 591 (2363)<br>105 (29)<br>- | 460 (1838)<br>300 (83)<br>- | 460 (1838)<br>303 (84)<br>- | 460 (1838)<br>318 (89)<br>21 (153) | 493 (1969)<br>266 (74)<br>21 (153) |
| Curing agent | BG<br>CHDM<br>TDDM<br>TMP | -<br>109 (752)<br>-<br>81 (600) | -<br>35 (448)<br>-<br>107 (800) | -<br>237 (1641)<br>-<br>27 (200) | -<br>277 (1921)<br>-<br>27 (200) | -<br>240 (1667)<br>-<br>- | -<br>232 (1606)<br>-<br>5 (40) | 61 (681)<br><br>134(681)<br>6 (47) | 68 (751)<br><br>147 (751)<br>6 (47) |
| Urethane group concentration (mmol/g)<br>Cross-linking density (mmol/g) | | 3.5<br>0.6 | 3.5<br>0.8 | 4.0<br>0.2 | 4.5<br>0.2 | 3.5<br>0 | 3.5<br>0.04 | 3.5<br>0.2 | 3.8<br>0.2 |
| $G_{Ic}$ (kJ/m2)<br>Cohesive failure rate (%) | | 0.62<br>100 | 0.72<br>100 | 0.17<br>100 | 0.15<br>100 | 0.25<br>100 | 0.25<br>100 | 1.48<br>100 | 1.22<br>100.00 |
| E' @-30°C (Pa)<br>E' @80°C (Pa) | | 5.12E+08<br>2.62E+08 | 5.50E+08<br>2.80E+08 | 2.31E+09<br>1.19E+09 | 1.53E+09<br>9.41E+08 | 1.53E+09<br>6.20E+08 | 1.42E+09<br>6.11E+08 | 2.00E+09<br>6.76E+08 | 2.31E+09<br>8.08E+08 |
| Elastic modulus retention rate (%) | | 51 | 51 | 51 | 62 | 41 | 43 | 34 | 35 |

[Table 3]

| | | Charged amount g(mmol) | | |
|---|---|---|---|---|
| | | Comparative Example 1 | Comparative Example 2 | Comparative Example 3 |
| Main agent | MT | 460 (1838) | 263 (1050) | 329 (1313) |
| | PTG-L3500 | 393 (1099) | 635 (177) | 529 (147) |
| | TMP | - | - | - |
| Curing agent | BG | 121 (1341) | - | |
| | CHDM | - | 76 (523) | 116 (803) |
| | TDDM | | | |
| | TMP | 27 (200) | 27 (200) | 27 (200) |
| Urethane group concentration (mmol/g) | | 3.5 | 2.0 | 2.5 |
| Cross-linking density (mmol/g) | | 0.2 | 0.2 | 0.2 |
| $G_{Ic}$ (kJ/m2) | | 1.10 | 0.91 | 0.94 |
| Cohesive failure rate (%) | | 100 | 0 | 0 |
| E' @-30°C (Pa) | | 5.54E+08 | 1.22E+08 | 2.80E+08 |
| E' @80°C (Pa) | | 1.64E+08 | 1.95E+07 | 5.34E+07 |
| Elastic modulus retention rate (%) | | 30 | 16 | 19 |

[Table 4]

| | | Charged amount g(mmol) | | | |
|---|---|---|---|---|---|
| | | Example 16 | Example 17 | Example 18 | Example 19 |
| Main agent | MT | 460 (1838) | 460 (18381050) | 394 (1575) | 460 (1838) |
| | N-968 | 366 (122) | 345 (115) | 465 (155) | 366(122) |
| | TMP | - | - | - | - |
| Curing agent | BG | 46(514) | 40 (445) | 34 (373) | 46 (514) |
| | CHDM | 74 (514) | 128 (890) | 54 (373) | 74 (514) |
| | TDDM | - | - | - | - |
| | TMP | 54 (400) | 27 (200) | 54 (400) | 54 (400) |
| Urethane group concentration (mmol/g) | | 3.5 | 3.5 | 3.0 | 3.5 |
| Cross-linking density (mmol/g) | | 0.4 | 0.2 | 0.4 | 0.4 |
| $G_{Ic}$ (kJ/m2) | | 0.62 | 0.67 | 1.11 | 0.62 |
| Cohesive failure rate (%) | | 100 | 100 | 100 | 100 |
| E' @-30°C (Pa) | | 4.04E+09 | 3.99E+09 | 4.26E+09 | 4.04E+09 |
| E' @80°C (Pa) | | 8.65E+08 | 3.60E+08 | 1.17E+08 | 8.65E+08 |
| Elastic modulus retention rate (%) | | 21 | 9 | 3 | 21 |

[Table 5]

| | | Charged amount g(mmol) | | | | |
|---|---|---|---|---|---|---|
| | | Example 20 | Example 21 | Example 22 | Example 23 | Example 24 |
| Main agent | MT<br>N-968<br>PCD3000<br>TMP | 460 (1838)<br>366 (121)<br>-<br>- | 460 (1838)<br>366 (122)<br>-<br>- | 460 (1838)<br>373 (125)<br>-<br>- | 460 (1838)<br>383 (128)<br>-<br>- | 460 (1838)<br>-<br>320(107)<br>- |
| Curing agent | BG<br>CHDM<br>TDDM<br>TMP | 53 (590)<br>85 (590)<br>-<br>40 (300) | 46 (514)<br>74 (514)<br>-<br>54 (400) | 33 (363)<br>52 (363)<br>-<br>81 (600) | 19 (211)<br>30 (211)<br>-<br>107 (800) | -<br>194 (1344)<br>-<br>27 (200) |
| Urethane group concentration (mmol/g) | | 3.5 | 3.5 | 3.5 | 3.5 | 3.5 |
| Cross-linking density (mmol/g) | | 0.3 | 0.4 | 0.6 | 0.8 | 0.2 |
| $G_{Ic}$ (kJ/m2) | | 0.62 | 0.62 | 0.68 | 0.61 | 0.67 |
| Cohesive failure rate (%) | | 100 | 100 | 100 | 100 | 100 |
| E' @-30°C (Pa) | | 3.64E+09 | 4.04E+09 | 3.40E+09 | 3.56E+09 | 2.08E+09 |
| E' @80°C (Pa) | | 1.54E+08 | 8.65E+08 | 1.01E+08 | 1.04E+08 | 2.82E+08 |
| Elastic modulus retention rate (%) | | 4 | 21 | 3 | 3 | 14 |

[Table 6]

| | | Charged amount g(mmol) |
|---|---|---|
| | | Comparative Example 4 |
| Main agent | MT<br>PCD3000<br>TMP | 329 (1313)<br>564(188)<br>- |
| Curing agent | BG<br>CHDM<br>TDDM<br>TMP | 21(231)<br>33 (231)<br>-<br>54 (400) |
| Urethane group concentration (mmol/g) | | 2.5 |
| Cross-linking density (mmol/g) | | 0.4 |
| $G_{Ic}$ (kJ/m2) | | 2.00 |
| Cohesive failure rate (%) | | 0 |
| E' @-30°C (Pa) | | 3.60E+09 |
| E' @80°C (Pa) | | 6.32E+07 |
| Elastic modulus retention rate (%) | | 30 |

In Examples 1 to 15 and Comparative Examples 1 to 3 in which a polyol (a-1) is a polyether polyol (a-1-1), the elastic modulus retention rates of Examples 1 to 15 were higher than those of Comparative Examples 1 to 3, and therefore, it was confirmed that a change in elastic modulus over a wide temperature range was suppressed in Examples 1 to 15. In addition, in Examples 1 to 9, 14, and 15, the fracture toughness values ($G_{1c}$) obtained through the DCB test were 0.30 kJ/m$^2$ or more, confirming that they exhibit high toughness. Furthermore, in Example 16 to 24, it was confirmed that the cohesive failure rate was excellent and the adhesion reliability was high.

In Examples 16 to 24 and Comparative Example 4 in which a polyol (a-1) is a polycarbonate polyol (a-1-2), the elastic modulus retention rates of Examples 16 to 24 were higher than that of Comparative Example 4, and therefore, it was confirmed that a change in elastic modulus over a wide temperature range was suppressed in Examples 16 to 24. In addition, in Example 16 to 24, it was confirmed that the cohesive failure rate was excellent and the adhesion reliability was high.

**Claims**

1. A urethane resin-forming composition which forms a urethane resin having a urethane group concentration of 2,800 mmol/kg or more, the composition comprising:

   a main agent (A); and
   a curing agent (B),
   wherein the main agent (A) contains an isocyanate group-terminated prepolymer (A-1) which is a reaction product of a component (a) containing one or more polyols (a-1) selected from the group consisting of a polyether polyol (a-1-1) and a polycarbonate polyol (a-1-2) and a polyisocyanate (a-2), and
   wherein the curing agent (B) contains an alicyclic diol (B-1).

2. The urethane resin-forming composition according to claim 1, which forms a urethane resin having a urethane group concentration of 2,800 mmol/kg to 4,700 mmol/kg.

3. The urethane resin-forming composition according to claim 1, which forms a urethane resin having a urethane group concentration of 2,800 mmol/kg to 3,800 mmol/kg.

4. The urethane resin-forming composition according to claim 1,
   wherein at least one of the component (a) and the curing agent (B) contains a polyfunctional component having three or more reactive groups.

5. The urethane resin-forming composition according to claim 4, which forms a urethane resin having a content of a structural unit derived from the polyfunctional component of 50 mmol/kg to 1,000 mmol/kg.

6. The urethane resin-forming composition according to claim 1,
   wherein the polyols (a-1) have a number average molecular weight of 2,500 or more.

7. The urethane resin-forming composition according to claim 1,
   wherein a solvent content is 1.0 mass% or less.

8. The urethane resin-forming composition according to claim 1, further comprising:
   a filler (C).

9. The urethane resin-forming composition according to claim 1,
   wherein at least one of the main agent (A) and the curing agent (B) is a liquid at a temperature of 25°C and at 1 atm.

10. A two-component adhesive agent comprising:
    the urethane resin-forming composition according to any one of claims 1 to 9.

11. An adhesive agent for an automotive structure comprising:
    the urethane resin-forming composition according to any one of claims 1 to 9.

12. A cured product of the urethane resin-forming composition according to any one of claims 1 to 9.

13. A production method for a cured product, comprising:

    a step of mixing a first agent containing a main agent (A) with a second agent containing a curing agent (B) to obtain a cured product containing a urethane resin,
    wherein the main agent (A) contains an isocyanate group-terminated prepolymer (A-1) which is a reaction product of a component (a) containing one or more polyols (a-1) selected from the group consisting of a polyether polyol (a-1-1) and a polycarbonate polyol (a-1-2) and a polyisocyanate (a-2),
    wherein the curing agent (B) contains an alicyclic diol (B-1), and

wherein the urethane resin has a urethane group concentration of 2,800 mmol/kg or more.

<div align="center">

**INTERNATIONAL SEARCH REPORT**

</div>

| | International application No. |
|---|---|
| | **PCT/JP2022/023182** |

**A.    CLASSIFICATION OF SUBJECT MATTER**

*C08G 18/10*(2006.01)i; *C08G 18/08*(2006.01)i; *C08G 18/32*(2006.01)i; *C08G 18/44*(2006.01)i; *C08G 18/48*(2006.01)i; *C08G 18/65*(2006.01)i; *C09J 11/04*(2006.01)i; *C09J 11/06*(2006.01)i; *C09J 11/08*(2006.01)i; *C09J 175/04*(2006.01)i; *C09J 175/08*(2006.01)i

FI:    C08G18/10; C08G18/48; C08G18/32 012; C09J11/04; C09J11/06; C08G18/32 034; C08G18/44; C08G18/65 011; C08G18/08 038; C09J11/08; C09J175/04; C09J175/08

According to International Patent Classification (IPC) or to both national classification and IPC

**B.    FIELDS SEARCHED**

Minimum documentation searched (classification system followed by classification symbols)

C08G18/10; C08G18/08; C08G18/32; C08G18/44; C08G18/48; C08G18/65; C09J11/04; C09J11/06; C09J11/08; C09J175/04; C09J175/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2019/230541 A1 (MITSUI CHEMICALS, INC.) 05 December 2019 (2019-12-05) claims 1, 3, paragraphs [0007], [0008], [0058], [0085], [0151], [0180], example 8 | 1-13 |
| X | JP 2016-519696 A (PPG INDUSTRIES OHIO, INC.) 07 July 2016 (2016-07-07) claim 1, paragraphs [0003], [0005], [0110], [0256], [0341]-[0344], [0425]-[0430], examples Z3, Z5 | 1, 2, 4-13 |
| A | | 3 |
| X | JP 2019-137756 A (DAI ICHI KOGYO SEIYAKU CO LTD) 22 August 2019 (2019-08-22) claims 1, 4, 5, paragraphs [0016], [0019], examples 5, 8, 13 | 1-6, 8, 9, 13 |
| A | | 7, 10-12 |
| A | JP 2-180919 A (AUSIMONT S.P.A.L.) 13 July 1990 (1990-07-13) | 1-13 |

☑ Further documents are listed in the continuation of Box C.     ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 July 2022** | **09 August 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
| --- |
| **PCT/JP2022/023182** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 111592851 A (YANCHENG INST TECH) 28 August 2020 (2020-08-28) | 1-13 |
| A | WO 2018/168945 A1 (DIC CORPORATION) 20 September 2018 (2018-09-20) | 1-13 |
| A | JP 2-199185 A (ENICHEM SYNTHESIS S.P.A.) 07 August 1990 (1990-08-07) | 1-13 |

Form PCT/ISA/210 (second sheet) (January 2015)

| INTERNATIONAL SEARCH REPORT | | International application No. |
|---|---|---|
| Information on patent family members | | **PCT/JP2022/023182** |

| Patent document cited in search report | | | Publication date (day/month/year) | Patent family member(s) | | | Publication date (day/month/year) |
|---|---|---|---|---|---|---|---|
| WO | 2019/230541 | A1 | 05 December 2019 | US 2021/0079216 A1 claims 1, 3, paragraphs [0006], [0007], [0057], [0084], [0150], [0180], example 8 EP 3805287 A1 KR 10-2020-0143472 A CN 112424252 A | | | |
| JP | 2016-519696 | A | 07 July 2016 | WO 2014/152819 A1 claim 1, paragraphs [0003], [0005], [0110], [0256], [0341]-[0344], [0425]-[0430], examples Z3, Z5 EP 2970554 A1 | | | |
| JP | 2019-137756 | A | 22 August 2019 | (Family: none) | | | |
| JP | 2-180919 | A | 13 July 1990 | EP 359273 A2 | | | |
| CN | 111592851 | A | 28 August 2020 | (Family: none) | | | |
| WO | 2018/168945 | A1 | 20 September 2018 | US 2019/0382558 A1 CN 110431186 A | | | |
| JP | 2-199185 | A | 07 August 1990 | US 4996283 A EP 369517 A1 | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009047962 A